# EUROPEAN PATENT APPLICATION

(11) **EP 2 226 783 A1**
(43) Date of publication of application: **08.09.2010**
(21) Application number: 09154024.5
(22) Date of filing: 27.02.2009
(51) Int. Cl.: G09F 19/22, G09F 27/00, G06Q 30/00

(54) **Adaptive pedestrian billboard system and related methods**

(71) Applicant: RESEARCH IN MOTION LIMITED, Waterloo, Ontario N2L 3W8 (CA)
(72) Inventor: Griffin, Jason T., Waterloo,Ontario,N2L 3W8 (CA); Scott, Sherrl Lee Loraine, Waterloo, Ontario N2L 3L3 (CA)
(74) Representative: Fennell, Gareth Charles

(57) **Abstract**

An adaptive pedestrian billboard system may include a display for passing pedestrian traffic, and a memory for storing a plurality of notifications having different visual feature detail levels. The system may further include a controller configured to cooperate with the display and the memory for determining a density of the passing pedestrian traffic, select notifications from the memory based upon the density of the passing pedestrian traffic so that notifications for higher density passing pedestrian traffic have lower visual feature detail levels and so that notifications for lower density passing pedestrian traffic have higher visual feature detail levels, and display the selected notifications on the display.

## Description

### Technical Field

The present disclosure relates to the field of communications media, and, more particularly, to billboard systems and related methods.

### Background

Billboards are frequently positioned along roadsides or in public areas where pedestrian traffic is prominent. Traditional billboards include a message or image printed on a flexible PVC vinyl sheet (or recyclable plastic in some cases) which is stretched over the face of the advertising structure. Some smaller billboards are often referred to a "posters." Poster displays may include a series of printed paper sheets that are pasted together, or single sheet vinyl displays.

Due to advancements in computers and electronics, more sophisticated types of electronic billboards have become prevalent in recent years. One example is digital billboards, which use light emitting diodes (LEDs) or similar techniques to display dynamic messages or advertisements. For example, digital billboards allow static advertisements to be rotated in succession, as well as the ability to move, scroll, fade, etc., messages or advertisements, and even play video images. Another advanced form of billboard is the holographic billboard.

Various approaches have been developed to take advantage of the additional functionality provided by such electronic billboards. Once such example is disclosed in U.S. Patent Pub. No. 2007/0357816, which is directed to determining a refresh rate of a dynamic roadside billboard. More particularly, traffic flow information is obtained, and the refresh rate of the dynamic billboard is determined based on the traffic flow information.

While such systems may provide certain advantages, additional functionality may be desirable in various applications.

### Brief Description of the Drawings

FIG. 1 is a schematic block diagram of an adaptive roadside billboard system in accordance with one exemplary embodiment shown during a period of faster passing vehicle traffic.

FIG. 2 is a front view of the roadside display of the system of FIG. 1 with a notification displayed thereon based upon the faster passing vehicle traffic.

FIG. 3 is a schematic block diagram of the adaptive roadside billboard system of FIG. 1 shown during a period of slower passing vehicle traffic.

FIG. 4 is a front view of the roadside display of the system of FIG. 3 with a notification displayed thereon based upon the slower passing vehicle traffic.

FIG. 5 is a schematic block diagram of the system of FIG. 1 illustrating passing vehicle traffic rate information collection techniques.

FIG. 6 is a flow diagram illustrating a method for displaying notifications on a roadside display for passing vehicle traffic in accordance with an exemplary embodiment.

FIG. 7 is a schematic block diagram of an adaptive pedestrian billboard system in accordance with one exemplary embodiment shown during a period of lower density passing pedestrian traffic.

FIG. 8 is a front view of the pedestrian display of the system of FIG. 7 with a notification displayed thereon based upon the lower density passing pedestrian traffic.

FIG. 9 is a schematic block diagram of the adaptive pedestrian billboard system of FIG. 7 shown during a period of higher density passing pedestrian traffic.

FIG. 10 is a front view of the pedestrian display of the system of FIG. 9 with a notification displayed thereon based upon the higher density passing pedestrian traffic.

FIG. 11 is a schematic block diagram of the system of FIG. 7 illustrating passing pedestrian traffic density information collection techniques.

FIG. 12 is a flow diagram illustrating a method for displaying notifications on a pedestrian display for passing pedestrian traffic in accordance with an exemplary embodiment.

FIG. 13 is a schematic block diagram illustrating exemplary components of a mobile wireless communications device that may be used for determining vehicle traffic rate or density, or passing pedestrian traffic density, in accordance with exemplary embodiments.

### Detailed Description

The present description is made with reference to the accompanying drawings, in which various embodiments are shown. However, many different embodiments may be used, and thus the description should not be construed as limited to the embodiments set forth herein. Rather, these embodiments are provided so that this disclosure will be thorough and complete. Like numbers refer to like elements throughout, and prime notation is used to indicate similar elements or steps in different embodiments.

Generally speaking, an adaptive pedestrian billboard system is disclosed herein which may include a display for passing pedestrian traffic, and a memory for storing a plurality of notifications having different visual feature detail levels. The system may further include a controller configured to cooperate with the display and the memory to determine a density of the passing pedestrian traffic, select notifications from the memory based upon the density of the passing pedestrian traffic so that notifications for higher density passing pedestrian traffic have lower visual feature detail levels and so that notifications for lower density passing pedestrian traffic have higher visual feature detail levels, and display the selected notifications on the display.

More particularly, the different visual feature detail levels may be based upon different densities of alphanumeric characters. The different visual feature detail levels may also be based upon different sizes of alphanumeric characters or different image detail levels, or both. Furthermore, the controller may further cooperate with the display to change a relative position of notifications based upon the density of the passing pedestrian traffic. By way of example, the notifications may include video images or static images, or both.

The adaptive pedestrian billboard system may also include at least one sensor in proximity to the display. As such, the controller may cooperate with the at least one sensor to determine the density of passing pedestrian traffic. The controller may also determine the density of passing pedestrian traffic based upon position information collected from mobile wireless communications devices of the pedestrians. In some embodiments, the memory and the controller may be collocated with the display.

The adaptive pedestrian billboard system may also include at least one speaker collocated with the display and cooperating with the controller for generating audio output for the notifications. As such, the controller may also change a volume level of the audio output based upon the density of the passing pedestrian traffic. By way of example, the notifications may include advertisements.

A related method for displaying notifications on a display for passing pedestrian traffic may include storing a plurality of notifications having different visual feature detail levels in a memory, and determining a density of the passing pedestrian traffic. The method may further include selecting notifications from the memory based upon the density of the passing pedestrian traffic so that notifications for higher density passing pedestrian traffic have lower feature detail levels and so that notifications for lower visual density passing pedestrian traffic have higher visual feature detail levels, and displaying the selected notifications on the display.

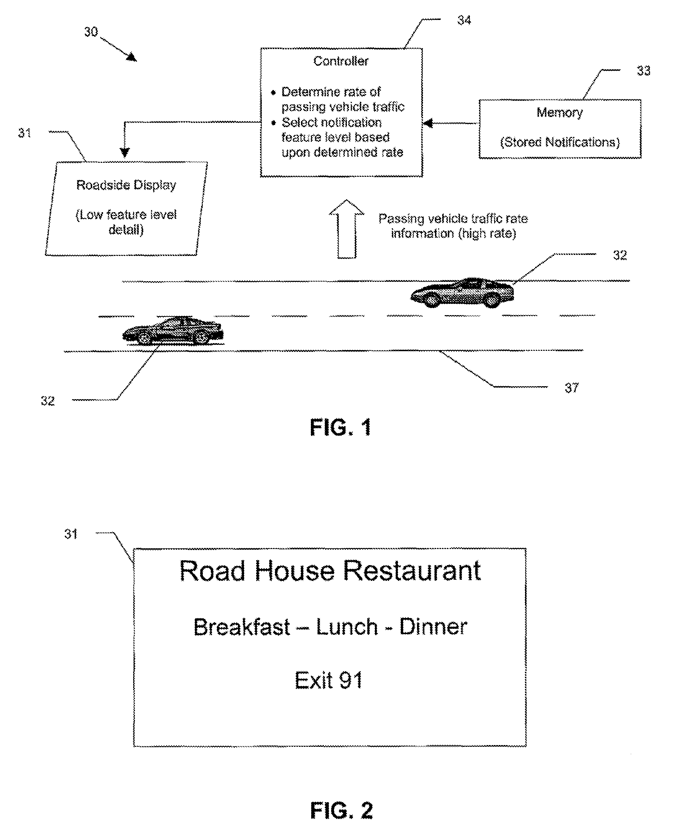

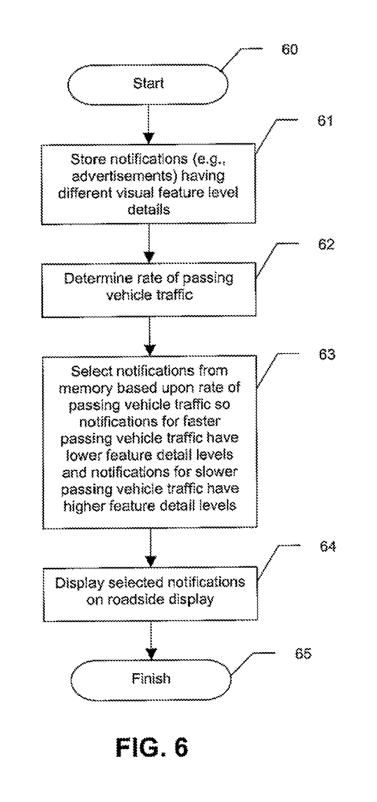

Referring initially to FIGS. 1 through 6, an adoptive roadside billboard system **30** and associated methods are first described. The system **30** illustratively includes a roadside display **31** for passing vehicle **32** traffic on a road **37,** and a memory **33.** The roadside display **31** may be a digital billboard display, such as those discussed above (e.g., LED, holographic, etc.). Beginning at Block **60,** the memory **33** is for storing a plurality of notifications having different visual feature detail levels, at Block **61.** By way of example, the notifications may include advertisements, motorist advisories (e.g., for accidents, road conditions, etc.), or other types of information that is desirable to display to motorists, as will be appreciated by those skilled in the art.

The different visual feature detail levels of the notifications may be based upon various characteristics. For example, different notifications may have different densities of alphanumeric characters (i.e., letters or numbers, or both). Furthermore, different notifications may have different sizes of alphanumeric characters. Still another detail level of notifications in some embodiments may be different image detail levels, such as the resolution of images to be included within a notification or the amount of features presented in the image, for example.

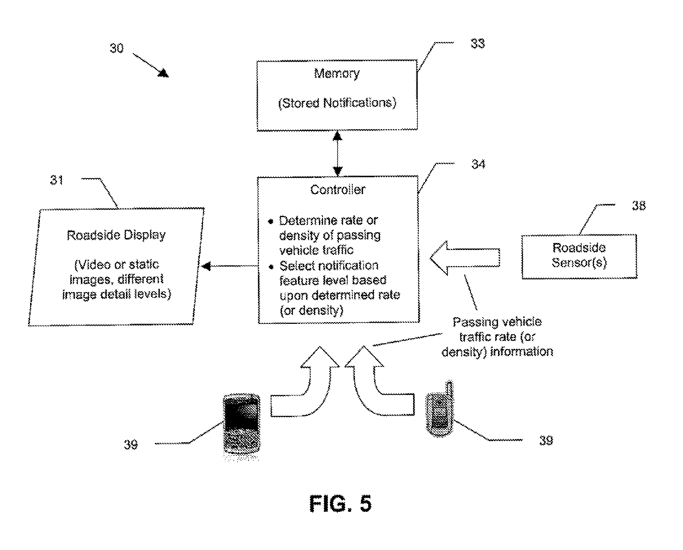

In some embodiments, the notifications may include video images or static images, or both (see FIG. 5). Generally speaking, a video image is considered herein as having a higher visual feature level detail than a comparable static image because video images include a series of images rather than a single image. However, in some implementations a static image may be considered to have a relatively high feature level as well, such as if it is a high resolution or high feature level image, as noted above.

Other information that may be included in the notifications include common short codes (CSCs) and quick response (QR) codes, for example. As will be appreciated by those skilled in the art, CSCs are a short series of number (e.g., 5 or 6 digits), to which a user may send a text message that will trigger a response message from an advertiser with additional information, coupons, special offers, etc. QR codes are graphical patterns that may be read by cellular phones with that include or represent a string of unique numbers, which cause the phone's browser to launch and redirect to a URL included in the QR code. In one embodiment, such additional codes may be included as additional feature level detail when the rate of passing traffic decreases (or traffic density increases), meaning that those passing by will have more time to view and interact with this additional information, as will be discussed further below.

The system **30** also illustratively includes a controller **34** for cooperating with the roadside display **31** and the memory **33** for determining a rate of the passing vehicle **32** traffic (Block **62**), selecting notifications from the memory based upon the rate of passing vehicle traffic so that notifications for faster passing vehicle traffic have lower feature detail levels and so that notifications for slower passing vehicle traffic have higher feature detail levels, at Block **63,** and displaying the selected notifications on the roadside display, at Block **64**, thus concluding the illustrated method (Block 65). In the example of FIG. 1, the vehicle **32** traffic is moving relatively fast. In other words, it may be said that the traffic is "up to speed," meaning that the traffic is moving at or near the posted speed limit for the road **37**. In such case, the vehicles **32** are traveling faster (i.e., at a higher rate), so drivers will typically have less time to look at roadside billboards because they will be passing the billboards faster (and are therefore in view of the billboard for a shorter duration).

As such, when traffic is moving at a relatively fast pace the controller **34** selects notifications with lower feature detail levels so that motorists are able to take in the information presented on the roadside display **31.** Referring to the example of FIG. 2, here an advertisement for the "Road House Restaurant" is displayed, along with a reduced set of information for motorists. That is, the display **31** indicates that the restaurant is open for breakfast, lunch, and dinner, and that the restaurant is located off of Exit 91. In other words, the amount of information presented on the display **31** is advantageously kept relatively small to include only the most pertinent details for motorists, since the motorists are unable to view and mentally process large amounts of visual data from a sign at higher rates of speed, as will be appreciated by those of skill in the art.

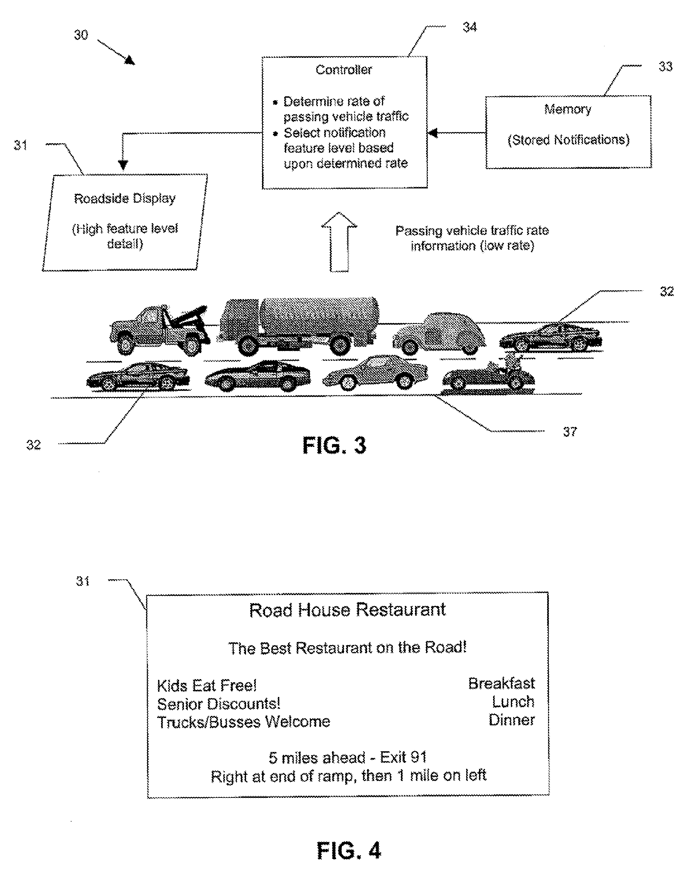

However, as traffic slows, motorists will be in view of the roadside display **31** for longer periods of time. This is especially the case during rush hour traffic or when there is an accident, etc., on the road **37** that causes traffic to temporarily come to a stop, i.e., "stop-and-go" or "bumper-to-bumper" traffic, as is illustrated in FIG. 3. Accordingly, motorists are now able to view and mentally process much greater levels of visual detail from the display **31**. In such case, the controller **34** advantageously causes the roadside display **31** to display an advertisement with a higher visual feature level detail, as seen in FIG. 4. Here, not only is the name of the Road House Restaurant displayed along with the exit number and "breakfast, lunch, dinner" information as in FIG. 2, but additional details are provided as well. In the illustrated example, the addition details include notices that kids eat free, senior discounts are offered, and that trucks/busses are welcome. Moreover, additional direction information is provided, including the distance to the upcoming exit, and directions on which way to turn and how far to travel after taking the exit. Various other types of notification information and configurations may be used in different embodiments, as will be appreciated by those skilled in the art.

From the examples of FIGS. 2 and 4 it will be appreciated that in some embodiments a same advertiser may utilize different advertisements for different vehicle traffic rates. That is, an advertiser advertises during periods of fast and slow traffic, but uses different advertisements tailored accordingly. However, this need not be the case in all embodiments. That is, some advertisers may prefer to only advertise when traffic is moving slowly so that they can provide more detailed advertisements to motorists, and therefore do not pay to display advertisements during periods when vehicles **32** are moving relatively fast. In some implementations, advertisement prices may be adjusted based upon the time during which advertisements are displayed, such as being more expensive when traffic rates are slower (i.e., usually indicating there is more traffic adjacent the display **31**). Thus, some advertisers may chose to run advertisements during periods when advertisements are less costly to display, e.g., when vehicles are moving faster.

Various approaches may be used to determine the rate of the passing vehicle **32** traffic. In accordance with one exemplary embodiment, one or more roadside velocity sensors **38** may be positioned along the road **37** in proximity to the roadside display **31**. By way of example, the velocity sensors could be roadside cameras, radio frequency (RF) sensors that detect RF signals from transmitters in passing vehicles **32,** pressure sensors, etc., as will be appreciated by those skilled in the art. The sensors may be positioned at various points along the road **37,** such as within a few miles of the display **31,** for example, although other distances are also possible. The controller **33** may also determine the rate of passing vehicle **32** traffic based upon position information collected from the vehicles. For example, the rate information could be collected from mobile wireless communications devices with satellite positioning capabilities (e.g., global positioning system (GPS)), such as cellular telephones, vehicle navigation devices, etc., carried within the vehicles **32.**

In some embodiments, traffic density may be used in addition to, or instead of, the traffic rate information to determine the appropriate notifications for the display **31.** For example, where the controlled **34** also determines passing vehicle traffic density, the controller may select notifications from the memory **33** based upon the rate and density of passing vehicle traffic so that notifications for faster passing vehicle traffic with higher densities have lower visual feature detail levels, and so that notifications for faster passing vehicle traffic with lower densities have higher visual feature detail levels. More, particularly, if traffic is moving fast but is relatively dense, this means that the cars are closer to one another. As a result, drivers may be more cautious in such situations and more focused straight ahead, meaning that they generally will not divert their attention to the display **31** for very long for safely reasons. Thus, notifications with less visual feature level detail are more appropriate in this scenario.

The traffic density information may be determined using the same approaches discussed above for determining vehicle rate (i.e., roadside sensors **38,** wireless communications devices **39,** etc.). However, in some embodiments it is possible that roadside sensors or satellite positioning units are not available for communication with the controller **34.** In such embodiments, the density may be used instead of the traffic rate, or to the traffic rate. Generally speaking, traffic rate or speed is proportional to traffic density in most scenarios, meaning that slower moving traffic is more dense, and faster moving traffic is less dense, although this is not always the case, as discussed above.

Thus, where traffic rates cannot be accurately determined, notifications may be selected such that more dense traffic results in notifications with higher visual feature level detail, and lower density traffic results in notifications with lower visual feature level detail. In such instances, the density of vehicles could be determined based upon a number of cellular devices communicating with a cellular tower in the vicinity of the display **31,** for example, although other density determining approaches may also be used. The day of the week and time of day may also be factored into the density or rate determination analysis. For example, if using density data to estimate the passing vehicle traffic rate, the day or time, or both, may be used to further check or refine the determination, such as if it is rush hour on a weekday, as will be appreciated by those skilled in the art.

In some embodiments, the memory **33** and the controller **34** may be collocated with the roadside display **31,** although this need not be the case in all embodiments. That is, the controller **34** or memory **33,** or both, could be remotely located from the display **31** and connected thereto via a wireless (e.g., cellular) or wide area network link, for example, although other communications approaches may also be used, as will be appreciated by those skilled in the art. The controller **34** may be implemented using one or more computing devices and associated software applications, as well as discrete circuitry, as will be appreciated by those skilled in the art. The various functions of the controller **34** described herein may be distributed across multiple computing platforms, or they may be performed by a single computing device.

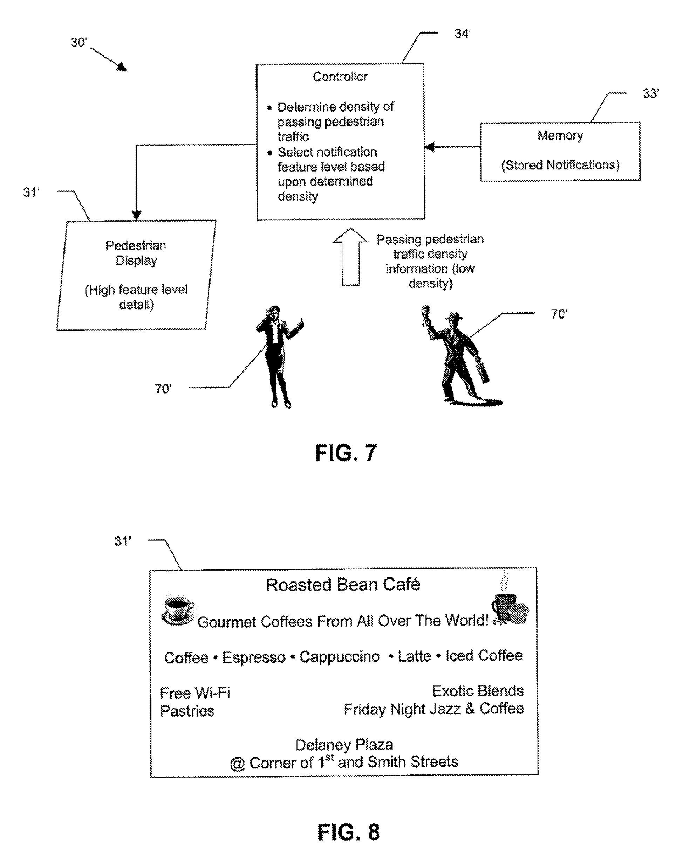

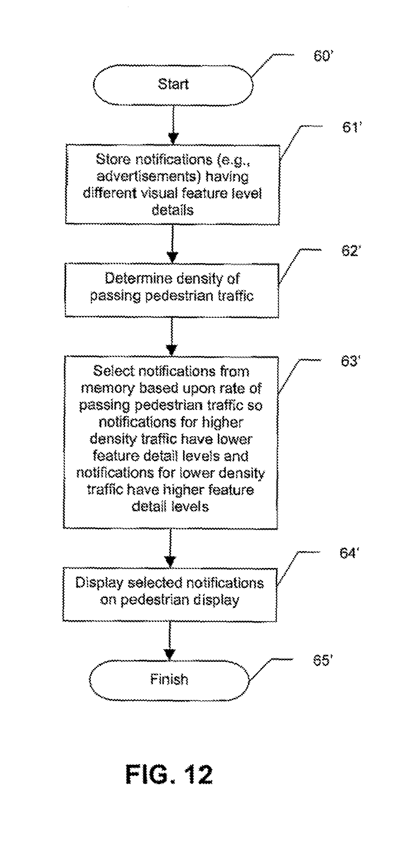

Turning now to FIGS. 7-12, a related adaptive billboard system **30'** and method are for pedestrians **70'.** In the illustrated embodiment, the system **30'** includes a display **31'** for passing pedestrian traffic, and a memory **33'** for storing a plurality of notifications having different visual feature detail levels, as similarly discussed above (Blocks **60'-61'**). Also, a controller **34'** is again included for cooperating with the display **31'** and the memory **33'** is for determining a density of the passing pedestrian traffic, at Block **62'.** Here, the controller **34'** selects notifications from the memory **33'** based upon the density of the passing pedestrian traffic so that notifications for higher density passing pedestrian traffic have lower feature detail levels and so that notifications for lower density passing pedestrian traffic have higher feature detail levels, at Block **63'.** The controller **34'** then displays the selected notifications on the display **31',** at Block **64',** thus concluding the illustrated method of FIG. 12 (Block **65'**).

Generally speaking, the more pedestrians **70'** there are in view of the display **31',** the more distraction there will be. That is, with larger crowds, people are generally less likely to pay attention to billboards and advertisements (i.e., their attention may be divided among more visual stimuli). Accordingly, notifications such as advertisements with more words and smaller character size may generally be more appropriate for smaller crowds where pedestrians **70'** may pay more attention, and have more opportunity to view and mentally process all of the information provided on the display **31'.** In the example of FIG. 8, an advertisement for the "Roasted Bean Cafe is displayed on the display **31'** during a period of low pedestrian traffic density (FIG. 7). The display **31'** therefore also includes a significant amount of additional detail, including: a slogan "gourmet coffees from all over the world"; a list of coffee drinks served; a notice that free wireless access (Wi-Fi) is provided; a notice that pastries are served; notice that exotic blends of coffees are available; a notice that there is a Friday night jazz and coffee time; and the location and intersection of the store is also provided.

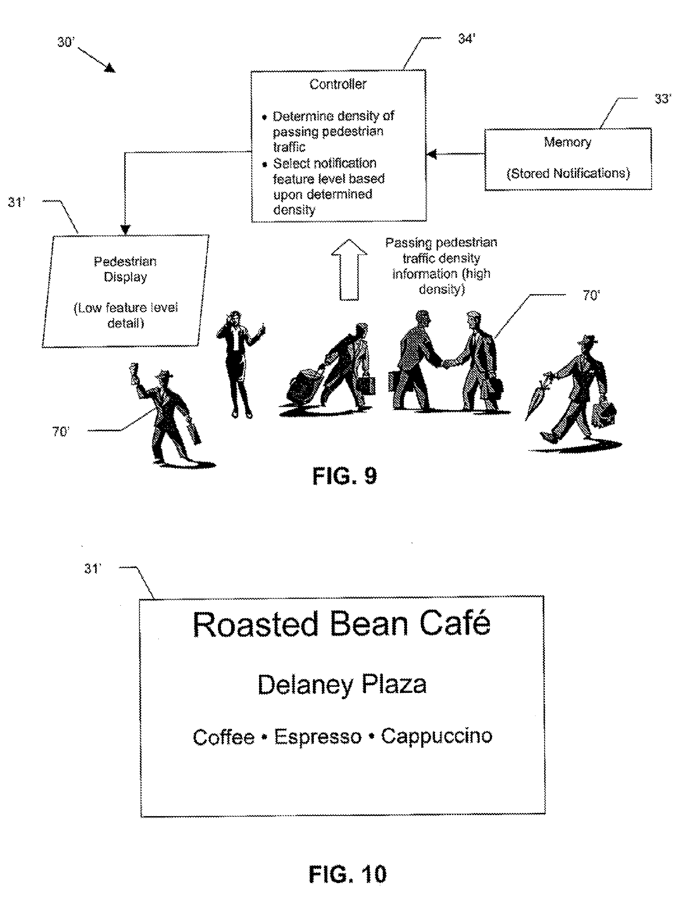

In the example of FIGS. 9 and 10 however, the density of pedestrians **70'** passing the display 31' is greater than in the prior example, meaning the area around the display is more "busy," and thus the amount of detail provided on the display is decreased. In this example, only the name of the café, its location, and an abbreviated list of the most popular coffee drinks is provided. That is, the advertisement on the display **31'** includes less alphanumeric characters, and the size of the characters is also increased, particularly the name. Moreover, image detail levels have been changed between the example of FIGS. 8 and 10, namely the coffee and pastry images shown in FIG. 8 are not present in FIG. 10.

As discussed above, video and static images may also be used depending upon the passing pedestrian **70'** density. For example, during the middle of the day when less pedestrians **70'** are around the display **31',** notification with videos and text streams may be used, whereas later in the day when more pedestrians are around static images may be displayed for relatively long periods of time. Other configurations are also possible, as will be appreciated by those skilled in the art.

Another advantageous feature is that the controller **34'** may further cooperate with the display **31'** to change a relative position of notifications on the display based upon the density of the passing pedestrian traffic. For example, as the area around the pedestrian display **31'** gets more crowded (i.e., the density increases), it may become more difficult for pedestrians **70'** farther away from the display to see lower portions thereof, and it may therefore be desirable to display less information toward the bottom of the display. In the example of FIG. 10, the location of the café (i.e., "Delaney Plaza") has been moved up on the display **31'** toward the top, so that this important information is less likely to be missed by passing pedestrians that may be at a significant distance from the display.

As with the adaptive roadside billboard system **30** discussed above, the pedestrian billboard system 30' may also include one or more sensors **38'** (e.g., cameras, motion sensors, etc.) in proximity to the display **31'** with which the controller **34'** cooperates to determine the density of passing pedestrian traffic. This determination may also be made based upon position information collected from mobile wireless communications devices **39'** of the pedestrians, as will be appreciated by those skilled in the art. Again, it should, be noted that in some embodiments, the memory **33'** and the controller **34'** may be collocated with the display **31',** but this need not be the case in all embodiments.

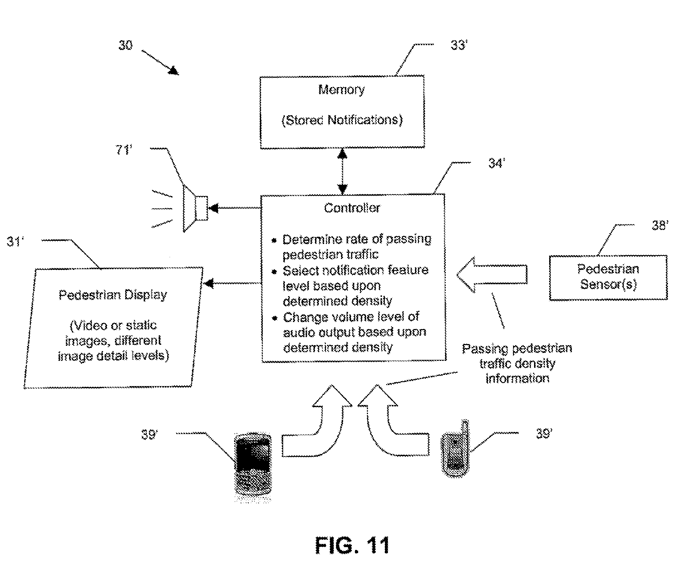

In the example of FIG. 11, the system **30'** also illustratively includes one or more speakers **71'** collocated with the display **31'** and cooperating with the controller **34'** for generating audio output for the notifications, such as spoken text, music, etc. As such, the controller **34'** may also change a volume level of the audio output based upon the density of the passing pedestrian traffic. For example, the volume may be increased as the crowd size (i.e., density) increases so that the audio output can be heard over the crowd noise, and vice-versa. Moreover, in some applications an audio sensor (e.g., microphone) may be used in cooperation with the controller **34'** to measure a noise level from the crowd and adjust the volume level of the audio output appropriately, as will be appreciated by those skilled in the art.

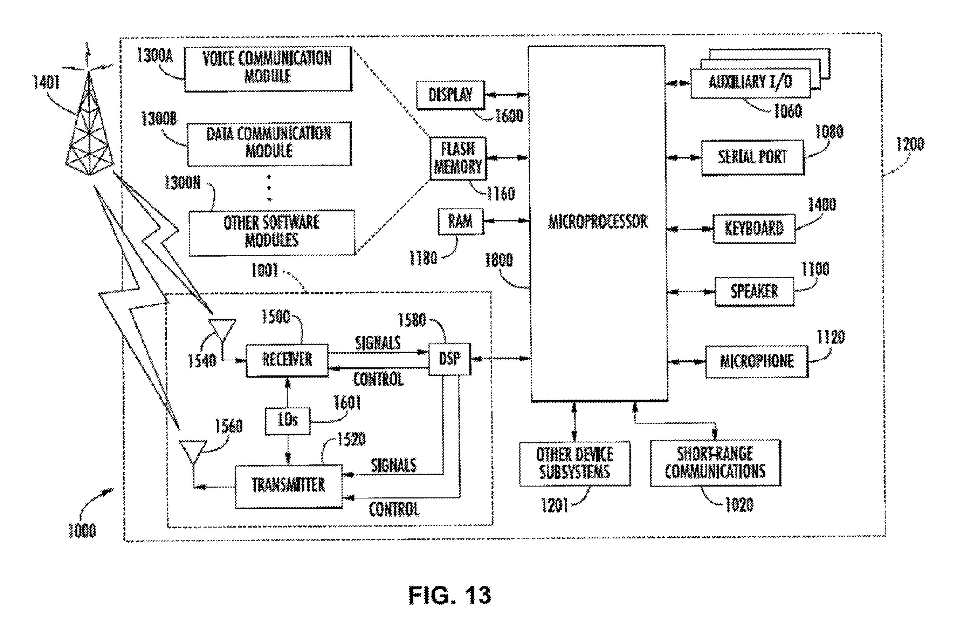

Exemplary components of a hand-held mobile wireless communications device **1000** that may be used in accordance with the systems **30, 31',** such as for determining traffic rate or density, or both, are further described in the example below with reference to FIG. 13. The device **1000** illustratively includes a housing **1200,** a keypad **1400** and an output device **1600.** The output device shown is a display **1600,** which may comprise a full graphic LCD. In some embodiments, display **1600** may comprise a touch-sensitive input and output device. Other types of output devices may alternatively be utilized. A processing device **1800** is contained within the housing **1200** and is coupled between the keypad **1400** and the display **1600.** The processing device **1800** controls the operation of the display **1600,** as well as the overall operation of the mobile device **1000,** in response to actuation of keys on the keypad **1400** by the user. In some embodiments, keypad **1400** may comprise a physical keypad or a virtual keypad (e.g., using a touch-sensitive interface) or both.

The housing **1200** may be elongated vertically, or may take on other sizes and shapes (including clamshell housing structures). The keypad **1400** may include a mode selection key, or other hardware or software for switching between text entry and telephony entry.

in addition to the processing device **1800,** other parts of the mobile device **1000** are shown schematically in FIG. 13. These include a communications subsystem **1001;** a short-range communications subsystem **1020;** the keypad **1400** and the display **1600,** along with other input/output devices **1060, 1080, 1100** and **1120;** as well as memory devices **1160, 1180** and various other device subsystems **1201.** The mobile device **1000** may comprise a two-May RF communications device having voice and data communications capabilities. In addition, the mobile device **1000** may have the capability to communicate with other computer systems via the Internet.

Operating system software executed by the processing device **1800** may be stored in a persistent store, such as the flash memory **1160,** but may be stored in other types of memory devices, such as a read only memory (ROM) or similar storage element. In addition, system software, specific device applications, or parts thereof, may be temporarily loaded into a volatile store, such as the random access memory (RAM) **1180.** Communications signals received by the mobile device may also be stored in the RAM 1180.

The processing device **1800,** in addition to its operating system functions, enables execution of software applications **1300A-1300N** on the device **1000.** A predetermined set of applications that control basic device operations, such as data and voice communications **1300A** and **1300B,** may be installed on the device **1000** during manufacture. In addition, a personal information manager (PIM) application may be installed during manufacture. The PIM may be capable of organizing and managing data items, such as e-mail, calendar events, voice mails, appointments, and task items, The PIM application may also be capable of sending and receiving data items via a wireless network **1401.** The PIM data items may be seamlessly integrated, synchronized and updated via the wireless network **1401** with the device user's corresponding data items stored or associated with a host computer system.

Communication functions, including data and voice communications, are performed through the communications subsystem **1001,** and possibly through the short-range communications subsystem. The communications subsystem **1001** includes a receiver **1500,** a transmitter 1520, and one or more antennas **1540** and **1560.** In addition, the communications subsystem **1001** also includes a processing module, such as a digital signal processor (DSP) **1580,** and local oscillators (LOs) **1601.** The specific design and implementation of the communications subsystem **1001** is dependent upon the communications network in which the mobile device **1000** is intended to operate. For example, a mobile device **1000** may include a communications subsystem **1001** designed to operate with the Mobitex™, Data TAC™ or General Packet Radio Service (GPRS) mobile data communications networks, and also designed to operate with any of a variety of voice communications networks, such as AMPS, TDMA, CDMA, MCDMA, PCS, GSM, EDGE, etc. Other types of data and voice networks, both separate and integrated, may also be utilized with the mobile device **1000.** The mobile device **1000** may also be compliant with other communications standards such as 3GSH, 3G, UMTS, 4G, etc.

Network access requirements vary depending upon the type of communication system. For example, in the Mobitex and DataTAC networks, mobile devices are registered on the network using a unique personal identification number or PIN associated with each device. In GPRS networks, however, network access is associated with a subscriber or user of a device. A GPRS device therefore utilizes a subscriber identity module, commonly referred to as a SIM card, in order to operate on a GPRS network.

When required network registration or activation procedures have been completed, the mobile device **1000** may send and receive communications signals over the communication network **1401**. Signals received from the communications network **1401** by the antenna **1540** are routed to the receiver **1500,** which provides for signal amplification, frequency down conversion, filtering, channel selection, etc., and may also provide analog to digital conversion. Analog-to-digital conversion of the received signal allows the DSP **1580** to perform more complex communications functions, such as demodulation and decoding. In a similar manner, signals to be transmitted to the network **1401** are processed (e.g. modulated and encoded) by the DSP **1580** and are then provided to the transmitter **1520** for digital to analog conversion, frequency up conversion, filtering, amplification and transmission to the communication network **1401** (or networks) via the antenna **1560.**

In addition to processing communications signals, the DSP **1580** provides for control of the receiver **1500** and the transmitter **1520**. For example, gains applied to communications signals in the receiver **1500** and transmitter **1520** may be adoptively controlled through automatic gain control algorithms implemented in the DSP **1580**.

In a data communications mode, a received signal, such as a text message or web page download, is processed by the communications subsystem **1001** and is input to the processing device **1800**. The received signal is then further processed by the processing device **1800** for an output to the display **1600,** or alternatively to some other auxiliary I/O device **1060.** A device user may also compose data items, such as e-mail messages, using the keypad **1400** and/or some other atixiliary I/O device **1060,** such as a touchpad, a rocker switch, a thumb-wheel, track ball, or some other type of input device. The composed data items may then be transmitted over the communications network **1401** via the communications subsystem **1001.**

In a voice communications mode, overall operation of the device is substantially similar to the data communications mode, except that received signals are output to a speaker **1100,** and signals for transmission are generated by a microphone **1120.** Alternative voice or audio I/O subsystems, such as a voice message recording subsystem, may also be implemented on the device **1000.** In addition, the display **1600** may also be utilized in voice communications mode, for example to display the identity of a calling party, the duration of a voice call, or other voice call related information.

The short-range communications subsystem enables communication between the mobile device **1000** and other proximate systems or devices, which need not necessarily be similar devices. For example, the short-range communications subsystem may include an infrared device and associated circuits and components, or a Bluetooth™ communications module to provide for communication with similarly-enabled systems and devices.

Many modifications and other embodiments will come to the mind of one skilled in the art having the benefit of the teachings presented in the foregoing descriptions and the associated drawings. Therefore, it is understood that various modifications and embodiments are intended to be included within the scope of the appended claims.

## Claims

1. An adaptive pedestrian billboard system (30') comprising:
a display (31') for passing pedestrian traffic;
a memory (33') for storing a plurality of notifications having different visual feature detail levels; and
a controller (34') configured to cooperate with said display and said memory for determining a density of the passing
pedestrian traffic,
select notifications from said memory based upon the density of the passing pedestrian traffic so that notifications for higher density passing pedestrian traffic have lower visual feature detail levels and so that notifications for lower visual density passing pedestrian traffic have higher visual feature detail levels, and
display the selected notifications on said display.

2. The adaptive pedestrian billboard system (30') of Claim 1 wherein the different visual feature detail levels are based upon different densities of alphanumeric characters.

3. The adaptive pedestrian billboard system (30') of Claim 1 wherein the different visual feature detail levels are based upon different sizes of alphanumeric characters.

4. The adaptive pedestrian billboard system (30') of Claim 1 wherein the different visual feature detail levels are based upon different image detail levels.

5. The adaptive pedestrian billboard system (30') of Claim 1 wherein said controller (34') further cooperates with said display (31') to change a relative position of notifications based upon the density of the passing pedestrian traffic.

6. The adaptive pedestrian billboard system (30') of Claim 1 wherein the notifications comprise at least one of video images and static images.

7. The adaptive pedestrian billboard system (30') of Claim 1 further comprising at least one sensor in proximity to said display (31'); and wherein said controller (34') cooperates with said at least one sensor (38') to determine the density of passing pedestrian traffic.

8. The adaptive pedestrian billboard system (30') of Claim 1 wherein said controller (34') determines the density of passing pedestrian traffic based upon position information collected from mobile wireless communications devices of the pedestrians.

9. The adaptive pedestrian billboard system (30') of Claim 1 wherein said memory (33') and said controller (34') are collocated with said displays (31').

10. The adaptive pedestrian billboard system (30') of Claim 1 further comprising at least one speaker collocated with said displays (31') and cooperating with said controller (34') for generating audio output for the notifications; and wherein said controller also changes a volume level of the audio output based upon the density of the passing pedestrian traffic.

11. The adaptive pedestrian billboard system (30') of Claim 1 wherein the notifications comprise advertisements.

12. A method for displaying notifications on a display (31') for passing pedestrian traffic and comprising:
storing a plurality of notifications having different visual feature detail levels in a memory (33');
determining a density of the passing pedestrian traffic;
selecting notifications from the memory based upon the density of the passing pedestrian traffic so that notifications for higher density passing pedestrian traffic have lower visual feature detail levels and so that notifications for lower density passing pedestrian traffic have higher visual feature detail levels; and
displaying the selected notifications on the display.

13. The method of Claim 12 wherein the different visual feature detail levels are based upon different densities of alphanumeric characters.

14. The method of Claim 12 wherein the different visual feature detail levels are based upon different sizes of alphanumeric characters.

15. The method of Claim 12 wherein the different visual feature detail levels are based upon different image detail levels.

## Amended claims

### Amended claims in accordance with Rule 137(2) EPC.

**1.** An adaptive pedestrian billboard system (30') comprising a display (31') for passing pedestrian traffic and a memory (33') for storing a plurality of notifications having different visual feature detail levels, **characterized in that** the system further comprises:
a controller (34') configured to cooperate with said display and said memory for
determining a density of the passing pedestrian traffic,
select notifications from said memory based upon the density of the passing pedestrian traffic so that notifications for higher density passing pedestrian traffic have lower visual feature detail levels and so that notifications for lower visual density passing pedestrian traffic have higher visual feature detail levels, and
display the selected notifications on said display.

**2.** The adaptive pedestrian billboard system (30') of Claim 1 wherein the different visual feature detail levels are based upon different densities of alphanumeric characters.

**3.** The adaptive pedestrian billboard system (30') of Claim 1 wherein the different visual feature detail levels are based upon different sizes of alphanumeric characters.

**4.** The adaptive pedestrian billboard system (30') of Claim 1 wherein the different visual feature detail levels are based upon different image detail levels.

**5.** The adaptive pedestrian billboard system (30') of Claim 1 wherein said controller (34') further cooperates with said display (31') to change a relative position of notifications based upon the density of the passing pedestrian traffic.

**6.** The adaptive pedestrian billboard system (30') of Claim 1 wherein the notifications comprise at least one of video images and static images.

**7.** The adaptive pedestrian billboard system (30') of Claim 1 further comprising at least one sensor in proximity to said display (31'); and wherein said controller (34') cooperates with said at least one sensor (38') to determine the density of passing pedestrian traffic.

**8.** The adaptive pedestrian billboard system (30') of Claim 1 wherein said controller (34') determines the density of passing pedestrian traffic based upon position information collected from mobile wireless communications devices of the pedestrians.

**9.** The adaptive pedestrian billboard system (30') of Claim 1 wherein said memory (33') and said controller (34') are collocated with said display (31').

**10.** The adaptive pedestrian billboard system (30') of Claim 1 further comprising at least one speaker collocated with said display (31') and cooperating with said controller (34') for generating audio output for the notifications; and wherein said controller also changes a volume level of the audio output based upon the density of the passing pedestrian traffic.

**11.** The adaptive pedestrian billboard system (30') of Claim 1 wherein the notifications comprise advertisements.

**12.** A method for displaying notifications on a display (31') for passing pedestrian traffic and comprising storing a plurality of notifications having different visual feature detail levels in a memory (33'), determining a density of the passing pedestrian traffic, selecting notifications from the memory based upon the density of the passing pedestrian traffic so that notifications for higher density passing pedestrian traffic have lower visual feature detail levels and so that notifications for lower density passing pedestrian traffic have higher visual feature detail levels, and displaying the selected notifications on the display.

**13.** The method of Claim 12 wherein the different visual feature detail levels are based upon different densities of alphanumeric characters.

**14.** The method of Claim 12 wherein the different visual feature detail levels are based upon different sizes of alphanumeric characters.

**15.** The method of Claim 12 wherein the different visual feature detail levels are based upon different image detail levels.
